# EUROPEAN PATENT APPLICATION

(11) **EP 1 688 314 A1**
(43) Date of publication of application: **09.08.2006**
(21) Application number: 05100806.8
(22) Date of filing: 04.02.2005
(51) Int. Cl.: B60R 21/01

(54) **Foil-type pressure sensor and method for evaluating the sensor response**

(71) Applicant: IEE INTERNATIONAL ELECTRONICS & ENGINEERING S.A., 6468 Echternach (LU)
(72) Inventor: Larsen, Peter, 7270 Helmsange (LU)
(74) Representative: Beissel, Jean

(57) **Abstract**

A method for determining an occupancy related status relating to a vehicle seat by means of a foil-type pressure sensing mat comprises the steps of determining a raw sensor resistance value of said plurality of pressure sensing cells, determining a raw compensation resistance value of said at least one compensation resistance, calculating a compensated sensor resistance value based on said raw sensor resistance value and said raw compensation resistance value, and determining said occupancy related status based on said compensated sensor resistance value. According to the invention said step of calculating a compensated sensor resistance value comprises the steps of obtaining a corrected compensation resistance value by applying a correction term to said raw compensation resistance value, said correction term being determined by production tolerances of said compensation resistance, and calculating said compensated sensor resistance value based on said raw sensor resistance value and said corrected compensation resistance value.

## Description

### Introduction

The present invention generally relates to foil-type pressure sensors and pressure sensing mats having an electrical resistance, which depends on the pressure applied onto the sensor. Foil-type pressure sensors of this kind comprise e.g. a first carrier foil and a second carrier foil arranged at a certain distance from each other by means of an inner spacer. The inner spacer comprises at least one cutout, which defines an active area of the pressure sensor. At least two electrodes and a layer of pressure sensitive material are arranged in the active area of the pressure sensor between said first and second carrier foils in such a way that, in response to a pressure acting on the active area of the pressure sensor, the first and second carrier foils are pressed together against the reaction force of the elastic carrier foils and an electrical contact is established between the at least two electrodes via the pressure sensitive material. Due to the properties of the pressure sensitive material, the electrical resistance of the contact between the two electrodes is depending on the force, with which the pressure sensitive layer and the electrodes are pressed together and accordingly on the pressure acting on the pressure sensor.

In a first embodiment of such pressure sensors, a first electrode is arranged on the first carrier foil and a second electrode is arranged on the second carrier foil in facing relationship with the first electrode. At least one of the electrodes is covered by a layer of pressure sensitive material, e.g. a semi-conducting material, such that when the first and second carrier foils are pressed together in response of a force acting on the switching element, an electrical contact is established between the first and second electrode via the layer of pressure sensitive material. The pressure sensors of this type are frequently called to operate in a so called "through mode".

In an alternative embodiment of the pressure sensors, a first and a second electrode are arranged in spaced relationship on one of the first and second carrier foils while the other carrier foil is covered with a layer of pressure sensitive material. The layer of pressure sensitive material is arranged in facing relationship to the first and second electrode such that, when said first and second carrier foils are pressed together in response to a force acting on the active area of the switching element, the layer of pressure sensitive material shunts the first and second electrode. These sensors are called to operate in the so-called "shunt mode".

The above-described pressure sensors can be manufactured cost-effectively and have proven to be extremely robust and reliable in practice. Due to these positive properties, foil-type pressure sensors are nowadays widely used in all kinds of switching and sensing applications. The sensors offer a very slim profile and low weight which makes them suitable for integration in various operating environments. One specific application for these foil-type pressure sensors includes seat sensors for sensing an occupancy status e.g. of a vehicle seat, the determined occupancy status being used for controlling a secondary restraint system of for triggering a seat belt reminder. Seat sensors usually comprise a plurality of foil-type pressure sensing cells arranged in a specific configuration and manufactured on common carrier foils.

As the pressure sensitive material may alter its electrical properties with the environment conditions and with the age of the sensor, the sensor response of the foil-type pressure sensors depends on the environment conditions and is subject to alteration during lifetime. In order to compensate for these sensor response variations, it is known to compensate the pressure sensor response by means of a reference resistor element made of the pressure sensitive material, which is produced simultaneously to the pressure sensitive material layer of the pressure sensors.

In this case, the determination of an occupancy of a vehicle seat is achieved based on compensated sensor resistance values, which are obtained by determining a raw sensor resistance value of said plurality of pressure sensing cells, determining a compensation resistance value of the compensation resistances and calculating a compensated sensor resistance value based on said raw sensor resistance value and the compensation resistance value.

This compensation of the sensor ageing and environmental conditions enables to stabilize the sensor response such that the accurateness of the pressure measurement is substantially constant over time. However due to production tolerances as well of the pressure sensors as of the compensation resistors, the accuracy of compensation may be unsatisfying, especially in applications were a high resolution is needed as e.g. in occupancy classification sensors.

### Object of the invention

The object of the present invention is to provide an improved method for determining an occupancy related status relating to a vehicle seat by means of a foil-type pressure sensing mat.

### General description of the invention

This object is achieved by a method according to claim 1. The proposed method for determining an occupancy related status relating to a vehicle seat by means of a foil-type pressure sensing mat, said foil-type pressure sensing mat comprising a plurality of pressure sensing cells and at least one compensation resistance, comprises the steps of determining a raw sensor resistance value of said plurality of pressure sensing cells, determining a raw compensation resistance value of said at least one compensation resistance, calculating a compensated sensor resistance value based on said raw sensor resistance value and said raw compensation resistance value, and determining said occupancy related status based on said compensated sensor resistance value. According to the invention said step of calculating a compensated sensor resistance value comprises the steps of obtaining a corrected compensation resistance value by applying a correction term to said raw compensation resistance value, said correction term being determined by production tolerances of said compensation resistance, and calculating said compensated sensor resistance value based on said raw sensor resistance value and said corrected compensation resistance value.

With the method of the present invention, the sensor response may be more accurately compensated by an additional compensation of the production tolerances of the compensation resistance values. It has in fact been found, that the production tolerances of the pressure sensing cells and the compensation resistors are quite different which results e.g. in the pressure sensitive cells response (value ohm average, VOA) to a specific pressure lying in the upper part of the tolerance range while the compensation resistance value may be in the lower part of the respective tolerance band. Due to these differences, the factor (value ohm average)/(Compensation resistor value) has been found to vary with a standard deviation of more than 10%.

Prior art methods for evaluating the pressure sensors do note take into account this difference in production tolerances. In fact, in prior art methods, a pressure sensing cell having a response VOA in the upper part of its tolerance band was automatically compensated with a compensation resistance value in the upper part of the tolerance band.

The present invention enhances the measurement accuracy by applying a correction term to the measured compensation resistor value to correct for any initial difference between the VOA and the compensation resistor values.

In a preferred embodiment of the invention, said correction term is calculated for compensating a difference in manufacturing tolerances of said compensation resistor and said pressure sensing cells. The correction factor will e.g. be calculated such that the compensation resistor reading will reflect were in the sensor mat response tolerance band the VOA lies. In other words, the correction fact applied to the measured compensation resistance values is chosen such that the corrected compensation resistance value lies in the same part of its tolerance band as the VOA of the pressure cells.

After the production of the sensing mat, the different pressure sensor cells and the compensation resistances undergo production end tests, wherein the compliance of the compensation resistance and the pressure sensitive cells with the specifications is checked. During this production end test, the resistance value of the compensation resistance and the response of the pressure sensitive cell at a specific pressure condition are measured e.g. in a vacuum test, and the measured values are compared with the respective tolerance ranges. In a preferred embodiment of the invention, the correction term is calculated based on the production end test measurements of said compensation resistance and said pressure sensing cells.

In a different embodiment calibration measurements may be executed after the assembly of the sensing mat into its final operating environment in the vehicle seat. The response of the sensing mat may e.g. be tested after its assembly into the seat vehicle by applying known load types and these calibration measurements may be used for calculating a single correction term or different correction terms. These correction terms may then be uploaded into the system algorithm of the sensing mat control circuit.

It should be noted, that the compensation of the ageing and environmental factors may be applied on a sensor mat level or on the level of the individual pressure sensitive cells. In the first case, a joined raw sensor resistance value is determined for a group of individual pressure sensing cells and this joined sensor resistance value is subsequently corrected prior to the determination of the occupancy status. In the latter case, said raw sensor resistance value is determined for each individual pressure sensing cell and compensation is done individually for each sensor cell. It is clear that while this individual compensation may be more accurate than a grouped compensation, such a solution requires of course additional computer power.

It will be appreciated, that the best results may be achieved, if the design of the compensation resistances is substantially identical with the design of the pressure sensitive layer in the individual pressure sensitive cells. In this case, the resistance level of the compensation resistor corresponds closely to the sensing mat resistance level. It is expected, that a compensation resistor with design elements similar to the functional sensor parts will react similarly to root causes of production variation, such as e.g. ink viscosity or the like.

## Claims

1. Method for determining an occupancy related status relating to a vehicle seat by means of a foil-type pressure sensing mat, said foil-type pressure sensing mat comprising a plurality of pressure sensing cells and at least one compensation resistance, the method comprising the steps of
determining a raw sensor resistance value of said plurality of pressure sensing cells,
determining a raw compensation resistance value of said at least one compensation resistance,
calculating a compensated sensor resistance value based on said raw sensor resistance value and said raw compensation resistance value, and
determining said occupancy related status based on said compensated sensor resistance value,
**characterised in that** said step of calculating a compensated sensor resistance value comprises the steps of
obtaining a corrected compensation resistance value by applying a correction term to said raw compensation resistance value, said correction term being determined by production tolerances of said compensation resistance, and
calculating said compensated sensor resistance value based on said raw sensor resistance value and said corrected compensation resistance value.

2. Method according to claim 1, wherein said correction term is calculated for compensating a difference in manufacturing tolerances of said compensation resistor and said pressure sensing cells.

3. Method according to claim 1 or 2, wherein said correction term is calculated based on production end test measurements of said compensation resistance and said pressure sensing cells.

4. Method according to any one of claims 1 to 3, wherein said raw sensor resistance value is determined for a group of individual pressure sensing cells.

5. Method according to any one of claims 1 to 3, wherein said raw sensor resistance value is determined for each individual pressure sensing cell.

6. Method according to any one of claims 1 to 5, wherein said correction term is further determined by the expected average ageing of said at least one compensation resistance.

7. Method according to any one of claims 1 to 6, wherein said correction term is calculated based calibration measurements, which are performed after the integration of said pressure sensing mat into its operating environment.
